# EUROPÄISCHE PATENTANMELDUNG

(11) **EP 4 488 117 A1**
(43) Veröffentlichungstag der Anmeldung: **08.01.2025**
(21) Anmeldenummer: 23184104.0
(22) Anmeldetag: 07.07.2023
(51) Int. Cl.: B60P 7/08, B60P 7/135

(54) **NUTZFAHRZEUGAUFBAU MIT LADUNGSSICHERUNGSEINRICHTUNG UND VERFAHREN ZUR LADUNGSSICHERUNG**

(71) Anmelder: Schmitz Cargobull AG, 48341 Altenberge (DE)
(72) Erfinder: MENSING, Udo, 48612 Horstmar (DE)
(74) Vertreter: Cohausz & Florack

(57) **Zusammenfassung**

Beschrieben und dargestellt ist ein Aufbau (1,16) eines Nutzfahrzeugs (N), insbesondere Lastkraftwagen, Anhänger oder Sattelauflieger, umfassend zwei Seitenwandelemente (2,17), einen zwischen den Seitenwandelementen (2,17) angeordneten Laderaum (9), eine im Laderaum (9) angeordnete Ladung (20,24) und eine

Ladungssicherungseinrichtung (15) zur Sicherung der Ladung (20,24) gegenüber einem Verrutschen in Längsrichtung des Aufbaus (1,16), wobei die

Ladungssicherungseinrichtung (15) wenigstens ein sich in Längsrichtung des Aufbaus (1,16) an die Ladung (20,24) anschließendes, über jeweils wenigstens ein Montageelement (14) an Krafteinleitungsmitteln (13,19) der beiden Seitenwandelemente (2,17) festgelegtes Halteelement (21,25) aufweist. Damit eine zufriedenstellende Ladungssicherung einfacher erreicht werden kann, ist vorgesehen, dass die Montageelemente (14) auf der Ladung (20,24) zugeordneten Seite des Halteelements (21) in einem Winkel (α) von kleiner 30° mit dem jeweils zugehörigen Seitenwandelement (2,17) abgespannt sind und dass wenigstens ein mit einem Krafteinleitungsmittel (13,19) eines Seitenwandelements (2,17) verbundenes Montageelement (14) lösbar mit dem Halteelement (21,25) verbunden ist.

## Beschreibung

Die Erfindung betrifft einen Aufbau eines Nutzfahrzeugs, insbesondere Lastkraftwagen, Anhänger oder Sattelauflieger, umfassend zwei Seitenwandelemente, einen zwischen den Seitenwandelementen angeordneten Laderaum, eine im Laderaum angeordnete Ladung und eine Ladungssicherungseinrichtung zur Sicherung der Ladung gegenüber einem Verrutschen in Längsrichtungseinrichtung des Aufbaus, wobei die Ladungssicherung wenigstens ein sich in Längsrichtung des Aufbaus an die Ladung anschließendes, über jeweils wenigstens ein Montageelement an Krafteinleitungsmitteln der beiden Seitenwandelemente festgelegtes Halteelement aufweist. Ferner betrifft die Erfindung ein Verfahren zur Sicherung einer Ladung in einem solchen Aufbau mit einer Ladungssicherungseinrichtung zur Sicherung der Ladung gegenüber einem Verrutschen in Längsrichtung des Aufbaus.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn Seitenplanen an den Seitenwänden vorgesehen sind, die entlang der Seitenwände verschoben werden können, spricht man auch von sogenannten Curtainsidern. Unabhängig von der Art der Planenaufbauten weisen diese meist über die Länge der Seitenwände verteilt angeordnete Rungen auf, welche das Dach gegenüber dem Ladeboden abstützen und zum Be- und Entladen des Laderaums in vielen Fällen entfernt oder zur Seite verschoben werden können. Die Rungen können zudem über Aufsatzlatten miteinander verbunden werden, welche die Seitenwände aussteifen. Bei Curtainsidern wird jedoch häufig auf Aufsatzlatten verzichtet. Dafür werden die Seitenplanen mit den Eckrungen der zugehörigen Seiten verbunden und zwischen den Eckrungen gespannt.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen. Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem geschäumten Kunststoff gebildet wird. Dabei können die innere und/oder die äußere Decklage selbst bedarfsweise mehrlagig aufgebaut sein.

Die Planenaufbauten und Kofferaufbauten umschließen einen Ladeboden auf dem die Ladung abgestellt und gegenüber einem Verrutschen gesichert werden kann. Zur Ladungssicherung werden oftmals Montageelemente in Form von Spanngurten verwendet, die um die Ladung geführt und beispielsweise bei Planenaufbauten in einem umlaufenden Rahmen des Ladebodens eingehängt werden. In Kofferaufbauten sind dagegen typischerweise sogenannte Ladungssicherungsschienen in den Seitenwänden verbaut, in denen die Spanngurte eingehängt werden können. Die Rahmen des Ladebodens und die Ladungssicherungsschienen weisen dabei Krafteinleitungspunkte zum Einhängen der Spanngurte auf, über die die Spanngurte stramm um die Ladung abgespannt werden können, ohne die Aufbauten zu beschädigen.

Neben der Ladungssicherung über Spanngurte sind weitere Methoden der Ladungssicherung bekannt, die beispielsweise Ladungssicherungsbalken, Netze oder Planen zur Ladungssicherung nutzen. Netze oder Planen kommen insbesondere beim Transport von lose geschichteter Ladung wie etwa beim Reifentransport in Frage, um ein Verrutschen der Ladung insgesamt zu verhindern. Die Netze oder Planen erstrecken sich dabei meistens über wenigstens einen Großteil der Breite und einen Großteil der Höhe des Laderaums. Das Anbringen der Ladungssicherungsmittel ist aber mit einem nicht unerheblichen Aufwand verbunden, zumal die Seitenwände durch die eingebrachte Ladung, insbesondere im Fall lose gestapelter Ladung, teilweise nur noch bedingt für die Ladungssicherung zugänglich sind.

Daher liegt der vorliegenden Erfindung die Aufgabe zugrunde, den Aufbau und das Verfahren jeweils der eingangs genannten und zuvor näher erläuterten Art derart auszugestalten und weiterzubilden, dass eine zufriedenstellende Ladungssicherung einfacher erreicht werden kann.

Diese Aufgabe ist bei einem Aufbau nach dem Oberbergriff von Anspruch 1 dadurch gelöst, dass die Montageelemente auf der Ladung zugeordneten Seite des Halteelements in einem Winkel von kleiner 30° mit dem jeweils zugehörigen Seitenwandelement abgespannt sind und dass wenigstens ein mit einem Krafteinleitungsmittel eines Seitenwandelements verbundenes Montageelement lösbar mit dem Halteelement verbunden ist.

Ferner ist die genannte Aufgabe gemäß Anspruch 10 gelöst durch ein Verfahren zur Sicherung einer Ladung in einem Aufbau nach einem der Ansprüche 1 bis 9 mit einer Ladungssicherungseinrichtung zur Sicherung der Ladung gegenüber einem Verrutschen in Längsrichtung des Aufbaus,
- bei dem an jedem der Seitenwandelemente jeweils wenigstens ein Montageelement an einem Krafteinleitungsmittel festgelegt wird,
- bei dem anschließend die Ladung in einem Bereich des Laderaums seitlich neben den Krafteinleitungsmitteln platziert wird,
- bei dem in der Längsrichtung des Aufbaus an der Ladung ein Halteelement vorgesehen wird und
- bei dem wenigstens ein Montageelement so lösbar mit dem Halteelement verbunden wird, so dass das Halteelement über die Montageelemente an den beiden Seitenwandelementen festgelegt ist und sich die Montageelemente auf der der Ladung zugeordneten Seite in einem Winkel von kleiner 30° mit dem jeweils zugehörigen Seitenwandelement abgespannt sind.

Bei dem Aufbau kann es sich um einen Planenaufbau mit einem Seitenwandelement beispielsweise aus einer Seitenplane oder um einen Kofferaufbau mit einer festen Seitenwand in Form eines Paneels handeln. In beiden Fällen lässt sich die Ladungssicherung vereinfachen, wenn in dem Laderaum des Aufbaus eine Ladung eingebracht worden ist. Dies gilt in besonderem Maße im Falle einer lose gestapelten Ladung, wie beispielsweise Reifen während des sogenannten Reifentransports. Reifen werden häufig gebrezelt geladen, wobei die Reifen mit unterschiedlichen Neigungen aufeinandergelegt werden, um eine höhere Dichte der Ladung zu erreichen und die Reifen untereinander gegenüber einem Verrutschen zu verkeilen. Eine Ladungssicherung ist aber dennoch erforderlich.

Hierzu wird eine Ladungssicherungseinrichtung eingesetzt, die wenigstens ein Montageelement und wenigstens ein Halteelement umfasst. Das Montageelement ist dabei insbesondere länglich ausgebildet und kann mit seinen gegenüberliegenden Enden an einem Krafteinleitungsmittel und an dem Halteelement festgelegt sein. Bevorzugt wird das Montageelement wenigstens 10 mal, insbesondere wenigstens 20 mal oder 40 mal, so lang sein wie es breit ist. Besonders bevorzugt ist es dabei für ein einfaches Handling, wenn das längliche Montageelement in Form eines Gurtelements, eines Seils, eines Drahts, eines Drahtseils oder einer Kette ausgebildet ist. Bei Verwendung eines Gurtelements ist es zum Zwecke des Abspannens des Gurtelements bevorzugt, wenn das Gurtelement als Spanngurt ausgebildet ist, der unter Aufnahme hoher Zugkräfte stramm abgespannt werden kann. Es können aber auch andere Montageelemente abgespannt werden und dabei integrierte Spannmitteln aufweisen und/oder mit zusätzlichen Spannmitteln verbunden sein. Entsprechende Spannmittel zum Spannen von Seilen, Drähten oder Ketten sind allgemein bekannt.

Bei dem Halteelement handelt es sich vorzugsweise um ein wenigstens grundsätzlich flächig ausgebildetes Halteelement, um über eine große Fläche an der Ladung anzuliegen und die Ladung so gegenüber einem Verrutschen zu sichern. Zur Ladungssicherung mit dem Halteelement wird dieses in einer Längsrichtung an die Ladung anschließend vorgesehen und mit dem wenigstens einen Montageelement an einem Krafteinleitungsmittel eines Seitenwandelements verbunden, insbesondere eingehängt. Meist soll die Ladung gegenüber einem Verrutschen nach hinten gesichert werden, insbesondere wenn die Ladung nach vorne an die Stirnwand des Aufbaus anschließt. Das Halteelement ist dann hinter der Ladung angeordnet. Es kann aber alternativ oder zusätzlich ebenfalls gewünscht sein, das Halteelement vor der Ladung vorzusehen. Dies kann beispielsweise zweckdienlich sein, wenn die Ladung aus Gründen der Gewichtsverteilung in der Mitte des Aufbaus platziert werden soll.

Das Halteelement kann insbesondere um lose gestapelte Ladung zu sichern eine Breite von wenigstens 1 m, vorzugsweise wenigstens 1,5 m, insbesondere wenigstens 2 m aufweisen. Aus demselben Grund kann das Halteelement eine Höhe von wenigstens 1 m, vorzugsweise wenigstens 2 m, insbesondere wenigstens 2,5 m aufweisen. Ein einfaches Handling des Halteelements ist möglich, wenn das Halteelement in einem nicht mit dem Aufbau verbundenen Zustand wenigstens im Wesentlichen flach, vorzugsweise vollflächig, auf einen ebenen Boden abgelegt werden kann.

Damit die Ladungssicherung nach dem Beladen des Laderaums zweckmäßig und einfach bewirkt werden kann, ist das wenigstens eine Montageelement lösbar mit dem wenigstens einen Halteelement verbunden. Das Montageelement kann dann schon vor dem Beladen des Aufbaus an einem Krafteinleitungsmittel eines Seitenwandelements festgelegt und erst nach dem Beladen des Laderaums mit dem wenigstens einen Halteelement verbunden werden. Das Halteelement stört dann das Beladen nicht oder nur unwesentlich. Zudem kann auf diese Weise sichergestellt werden, dass das Montageelement in einem Winkel von kleiner 30° zum zugehörigen Seitenwandelement abgespannt werden kann, und zwar auf der der Ladung zugeordneten Seite des Halteelements. Wäre das Montageelement nicht bereits vor dem Beladen des Laderaums an einem Krafteinleitungsmittel festgelegt worden, könnte es nach dem Beladen erheblich schwieriger sein, das Montageelement an dem entsprechenden Krafteinleitungsmittel festzulegen, weil die Ladung die Zugänglichkeit des dortigen Krafteinleitungsmittels erschwert.

Unter einem Krafteinleitungsmittel wird vorliegend ein solches verstanden, über das entsprechende Ladungssicherungskräfte sicher in das Seitenwandelement eingeleitet werden können und das in geeigneter Weise mit dem wenigstens einen Montageelement verbunden werden oder verbunden sein kann. Das Montageelement kann mithin je nach Bedarf lösbar an dem Krafteinleitungsmittel verbunden werden oder dauerhaft, jedenfalls unverlierbar. Das wenigstens eine Montageelement kann bedarfsweise auch mit dem Krafteinleitungsmittel verbunden sein, auch wenn es beispielsweise bei einer Fahrt gar nicht zur Ladungssicherung genutzt wird. Das Montageelement ist dann aber bei einer späteren Beladung bereits an geeigneter Stelle am Seitenwandelement vorgesehen. In Längsrichtung des Seitenwandelements können mehrere Montageelemente verteilt vorgesehen sein. Dann steht je nach der Größe oder der Menge der Ladung, also je nach dem, wie weit sich die Ladung in Längsrichtung des Laderaums erstreckt, bereits an geeigneter Stelle ein Montageelement zur Ladungssicherung zur Verfügung.

Durch das Abspannen des Montageelements in einem Winkel von kleiner 30° mit dem zugehörigen Seitenwandelement kann sichergestellt werden, dass die über das Montageelement in das Seitenwandelement eingeleitete Kräfte von dem Seitenwandelement auch sicher aufgenommen werden können. Die Kraft wird dann deutlich überwiegend in Längsrichtung des Aufbaus in das Seitenwandelement eingeleitet und nicht in Querrichtung des Aufbaus. In der Querrichtung des Aufbaus können die Seitenwandelemente typischerweise viel geringere Kräfte aufnehmen als in deren Längsrichtung, ohne dass es zu nachhaltigen Beschädigungen der Seitenwandelemente kommt. Daher ist es grundsätzlich weiter bevorzugt, wenn der entsprechende Winkel kleiner als 20°, insbesondere kleiner als 10°, ist. Um einen geeigneten Winkel zwischen dem Montageelement und dem zugehörigen Seitenwandelement bereitzustellen, muss das Montageelement weit genug von dem zu sichernden Ende der Ladung beabstandet an einem Krafteinleitungsmittel des Seitenwandelements angeordnet sein. Da das Montageelement zweckmäßiger Weise vor dem Einbringen der Ladung an einem Krafteinleitungsmittel festgelegt wird, so dass dieses Festlegen nicht durch die Ladung behindert oder unmöglich gemacht wird, muss vorher abgeschätzt werden, bis wohin sich die Ladung im Laderaum nach dem Beladen erstrecken wird.

Es sollte wenigstens ein Montageelement lösbar mit dem Halteelement verbunden werden können, damit das Be- und/oder Entladen des Laderaums mehr oder weniger unbeeinträchtigt von dem Halteelement erfolgen kann. Wenn alle Montageelemente lösbar mit dem Halteelement verbunden werden können, kann das Halteelement erst nach dem Beladen in den Laderaum eingebracht werden bzw. vor dem Entladen aus dem Laderaum entfernt werden. Dies ist aber nicht zwingend erforderlich. Es kann ausreichen, wenn das Halteelement an einer Seite lösbar mit wenigstens einem Montageelement verbunden ist. An der anderen Seite kann das Halteelement unlösbar mit wenigstens einem Montageelement verbunden sein. Dann ist das Halteelement zwar über das wenigstens eine Montageelement im Laderaum angebracht. Das Halteelement kann aber angrenzend zu dem entsprechenden Seitenwandelement angeordnet sein, um das Be- und/oder Entladen allenfalls geringfügig zu behindern.

Das wenigstens eine Montageelement kann ein Spanngurt sein, der eine Einrichtung, etwa eine Ratsche, zum Spannen des Gurts umfasst. Das wenigstens eine Montageelement kann aber auch ein Gurt sein, der anderweitig, etwa händisch, gespannt und dann in der gespannten Stellung festgelegt wird. Entsprechende Gurte sind aus anderen Anwendungen grundsätzlich bekannt. Die Montageelemente oder Gurte weisen bedarfsweise eine größere Breite wie Dicke auf, was das Handling und die Kraftübertragung vereinfacht. Diese Breitenunterschiede können jedoch auch sehr gering sein oder ganz wegfallen. Die Abmessungen des wenigstens einen Montageelements sind grundsätzlich von allenfalls untergeordneter Bedeutung.

Bei einem ersten besonders bevorzugten Aufbau ist das wenigstens eine Halteelement als Wand, insbesondere als Wandpaneel, ausgebildet. Über eine feste Wand kann die von der Ladung abzuleitende Kraft sehr gleichmäßig verteilt und ein ebener Abschluss bereitgestellt werden. Wenn die Wand in Form eines Wandpaneels mit zwei strukturgebenden Außenlagen und einer Kernlage, etwa aus einem geschäumten Kunststoff, gebildet wird, kann die Wand einerseits sehr stabil und andererseits sehr leicht ausgebildet werden. Einfacher zu montieren und zu lagern werden aber Halteelemente in Form einer Plane oder eines Netzes sein. Im Falle eines Netzes kann Material eingespart werden, es sind aber Öffnungen vorhanden, durch die kleine Ladung versehentlich hindurchrutschen kann.

Unabhängig von der Art des Halteelements kann es zweckmäßig sein, wenn wenigstens zwei Halteelemente im Laderaum vorgesehen sind. Die beiden Halteelemente können dann wenigstens teilweise demselben Ende der Ladung in Längsrichtung des Aufbaus gesehen zugeordnet sein. Es muss dann beispielsweise nicht ein einziges Halteelement über näherungsweise die gesamte Höhe und/oder Breite des Laderaums abgespannt werden. Es können stattdessen einfacher und schneller zwei kleinere Halteelemente vorgesehen sein, um ein Verrutschen der Ladung zu vermeiden. Für eine einfache und schnelle Montage kann es dabei dienlich sein, wenn die Halteelemente direkt oder indirekt lösbar miteinander verbunden werden können, wozu wiederum bedarfsweise Montageelemente, vorzugsweise Spanngurte, verwendet werden können.

Es kann beispielsweise wenigstens ein mit wenigstens einem Krafteinleitungsmittel an einem Seitenwandelement verbundenes Montageelement lösbar über ein Halteelement mit einem weiteren Halteelement verbunden sein. Beide Halteelemente sind mithin untereinander verbunden und bevorzugt jeweils über wenigstens ein Montageelement mit gegenüberliegenden Seitenwandelementen. Wenigstens ein Montageelement kann dabei lösbar mit dem zugehörigen Halteelement verbunden sein, erforderlich ist dies aber nicht. Es können auch beide Halteelemente unlösbar mit jeweils wenigstens einem Montageelement verbunden sein. Die Halteelemente können dann beim Be- und/oder Entladen angrenzend zu gegenüberliegenden Seitenwandelementen angeordnet werden und nach dem Beladen lösbar miteinander verbunden, sowie vor dem Entladen voneinander getrennt werden.

Besonders einfach kann es in diesem Zusammenhang sein, wenn die beiden Halteelemente über wenigstens eine Steckverbindung miteinander verbunden sind. Die Steckverbindung kann dabei einfach direkt erfolgen oder über wenigstens ein Montageelement, um das Verbinden der Halteelemente je nach Beladesituation zu vereinfachen.

Alternativ zu zwei miteinander auf einer Seite der Ladung verbundenen Halteelemente kann auch ein zweiteiliges Halteelement vorgesehen sein. Der Unterschied besteht dabei im Wesentlichen darin, ob die beiden Halteelemente als separate Halteelemente oder als separate Teile eines Halteelements angesehen werden, die zur Bildung eines gemeinsamen Halteelements miteinander verbunden werden können. Der Übergang zwischen zwei separaten Halteelementen und einem zweiteiligen Halteelement können fließend sein. Es kann auch sein, dass nicht zwischen einem zweiteiligen Halteelement und zwei miteinander verbundenen, separaten Halteelementen unterschieden werden kann.

Um lose Ladung zu sichern, die relativ hoch gestapelt oder geschichtet ist, kann es sich anbieten, wenn das wenigstens eine Halteelement über jeweils wenigstens zwei Montageelemente an den Seitenwandelementen festgelegt ist. Auch die jeweils wenigstens zwei Montageelemente sind dann auf der der Ladung zugeordneten Seite des Halteelements mit den zugehörigen Seitenwandelementen verbunden, und zwar so, dass die Montageelemente jeweils in einem Winkel von kleiner 30° mit dem jeweils zugehörigen Seitenwandelement abgespannt sind. Wenn die Montageelemente dabei unterschiedlich hoch am zugehörigen Seitenwandelement mit Krafteinleitungsmitteln befestigt sind, kann die Kraft von der Ladung gleichmäßiger auf das Seitenwandelement abgeleitet werden. Unabhängig davon kann es auch zweckmäßig sein, wenn die wenigstens zwei Montageelemente mit jeweils wenigstens einem Krafteinleitungsmittel der Seitenwandelemente verbunden sind und/oder wenn die wenigstens zwei Montageelemente wenigstens eines Seitenwandelements lösbar mit dem wenigstens einen Halteelement verbunden sind. Das Halteelement kann dann Kräfte an unterschiedliche Krafteinleitungsmittel ableiten und/oder lösbar mit den wenigstens einem Seitenwandelement zugeordneten Montageelementen verbunden werden.

Wenn die wenigstens zwei jedem Seitenwandelement zugeordneten Montageelemente jeweils auf unterschiedlichen Höhen mit dem wenigstens einen Halteelement verbunden sind, kann die Ladung über eine große Höhe zuverlässig gesichert werden, ohne dass das Halteelement beispielsweise umknickt oder anderweitig nachgibt. Diese Ableitung der Kräfte kann dabei weiter begünstigt werden, wenn die wenigstens zwei Montageelemente, die jeweils einem Seitenwandelement zugeordneten sind, jeweils auf unterschiedlichen Höhen mit Krafteinleitungsmitteln der jeweiligen Seitenwandelemente verbunden sind.

Das Be- und Entladen kann vereinfacht werden, wenn das wenigstens eine Montageelement über eine Steckverbindung mit dem wenigstens einen Halteelement lösbar verbunden ist. Zur Montage muss das Montageelement und das Halteelement einfach ineinandergesteckt werden. Solche Steckverbindungen lassen sich auch, etwa durch Betätigen eines Lösemechanismus, einfach wieder voneinander trennen. Entsprechende Steckverbindungen sind aus anderen Anwendungen hinreichend bekannt.

Alternativ oder zusätzlich kann vorgesehen sein, dass die den gegenüberliegenden Seitenwandelementen zugeordneten Montageelemente jeweils lösbar mit dem wenigstens einen Halteelement verbunden sind. In einem solchen Fall können vor dem Beladen nur die Montageelemente montiert sein. Das Halteelement kann dann erst nach Abschluss des Beladens in den Laderaum eingebracht und dort mit den Montageelementen verbunden werden. Beim Entladen kann das Halteelement zunächst gänzlich gelöst und aus dem Laderaum entfernt werden, bevor die Ladung aus dem Laderaum entnommen wird.

Zweckmäßig für die Handhabung und praktikabel zum Ableiten von Kräften kann es sein, wenn das wenigstens eine Montageelement als wenigstens ein Gurtelement, wenigstens ein Seil, wenigstens ein Draht, wenigstens ein Drahtseil oder wenigstens eine Kette ausgebildet ist. Im Falle von mehreren Montageelementen können diese der Einfachheit halber gleichartig ausgebildet sein. Bedarfsweise kann es sich aber auch anbieten, wenn unterschiedliche Arten von Montageelemente, etwa umfassend wenigstens ein Gurtelement, wenigstens ein Seil, wenigstens ein Draht, wenigstens ein Drahtseil oder wenigstens eine Kette, verwendet werden.

Die erfindungsgemäßen Vorteile werden in erheblichem Maße genutzt, wenn der Aufbau ein Planenaufbau ist und die Seitenwandelemente Seitenplanen sind. In solchen Fällen ist eine adäquate Ladungssicherung oft problematisch. Die Stabilität der Seitenplanen ist ebenso begrenzt, wie die Stabilität der an den Seitenwänden meist ebenfalls vorgesehenen Rungen. Die von der Ladung übertragenen Kräfte müssen mithin in geeigneter Weise abgeleitet werden, ohne den Aufbau zu beschädigen. Zu diesem Zweck bietet es sich der einfachen Handhabung halber weiter an, wenn die Montageelemente in Krafteinleitungsmittel eingehängt werden, die kostengünstig in Form von Schlaufen ausgebildet sein können. Die Schlaufen können an den Seitenwandplanen und/oder an Längsgurten vorgesehen sein, die sich längs der Seitenplanen erstrecken und mit den Seitenplanen verbunden sein können. Die Längsgurte können beispielsweise mit einem Planenstoff der Seitenplanen verklebt und/oder vernäht sein. Zur Ableitung größerer Kräfte können die Längsgurte, wenigstens im verbundenen Zustand der Seitenplane, mit einer Stirnwand und/oder einer Rückwand verbunden sein. Dies kann beispielsweise bewerkstelligt werden, in dem die Seitenplane über ein Verbindungsmittel, etwa in Form einer Hakleiste oder Spannstange, in eine Eckrunge eingehängt und bedarfsweise mittels des Verbindungsmittels, insbesondere der Spannstange, gegenüber der Eckrunge gespannt wird.

Der Aufbau kann aber auch in Form eines Kofferaufbaus ausgebildet sein, wobei die Seitenwandelemente durch feste Seitenwände gegeben sind. Diese festen Seitenwände umfassen dann vorzugsweise zwei strukturgebende Decklagen, die selbst jeweils mehrlagig ausgebildet sein können und eine Schicht aus Aluminium, Stahl oder faserverstärktem Kunststoff umfassen können. Die Montageelemente können in Krafteinleitungsmittel der Seitenwände eingehängt sein, wobei diese Krafteinleitungsmittel durch Ladungssicherungsschienen bereitgestellt werden können. Bedarfsweise können die Ladungssicherungsschienen in die Seitenwände integriert sein und über ihre jeweilige Länge mehrere Krafteinleitungsmittel bereitstellen. Grundsätzlich ist es jedoch zweckmäßig, wenn die Montageelemente Haken zum Einhängen in die Krafteinleitungsmittel aufweisen.

Über die Länge der Seitenwandelemente können mehrere Montageelemente verteilt angeordnet werden, auch wenn zur Ladungssicherung jeweils nur einige davon benötigt werden. Es muss dann nicht vor dem Beladen abgeschätzt werden, bis wohin die Ladung reicht, um an der entsprechenden Stelle Montageelemente vorzusehen. Der Laderaum kann einfach beladen werden und können dann die in der Nähe des Endes der Ladung vorhandenen Montageelemente zur Ladungssicherung verwendet werden. Die weiteren, nicht zum Befestigen des Halteelements verwendeten Montageelemente sind vorzugsweise in Längsrichtung der Seitenwandelemente verteilt an unterschiedlichen Krafteinleitungsmitteln der Seitenwandelemente festgelegt.

Um eine zweckmäßige Gewichtsverteilung der Ladung sicherstellen zu können, kann in Längsrichtung des Aufbaus sowohl vor der Ladung als auch hinter der Ladung wenigstens ein an die Ladung anschließendes Halteelement vorgesehen sein. Die Ladungssicherung kann dann nach vorne und nach hinten erfolgen, und zwar über jeweils wenigstens ein Montageelement, das an den Seitenwandelementen festgelegt ist. Die Montageelemente erstrecken sich dann vorzugsweise jeweils in die der Ladung zugeordneten Richtungen zum zugehörigen Seitenwandelement, wo die Montageelemente an Krafteinleitungsmitteln in einem Winkel von kleiner 30° abgespannt sind. Bevorzugt ist dabei ein Winkel von weniger als 20°, insbesondere weniger als 10°. Wenigstens ein Montageelement jedes Halteelements ist dabei lösbar mit dem entsprechenden Halteelement verbunden. Die Halteelemente können dabei vorzugsweise von gegenüberliegenden Seiten an der Ladung anliegen, um die bei der Ladungssicherung auftretenden Kräfte zu verringern und ein Verrutschen der Ladung zu verhindern.

Bei einem ersten besonders bevorzugten Verfahren ist vorgesehen, dass an einem Seitenwandelement ein Montageelement festgelegt wird, bevor die Ladung im Laderaum platziert wird. Das wenigstens eine Montageelement wird dabei an einem Krafteinleitungsmittel eines Seitenwandelements festgelegt und mit dem Halteelement verbunden. Der Einfachheit halber wird das wenigstens eine Montageelement lösbar mit dem Halteelement verbunden.

Um die Ladungssicherung bei höher gestapelter Ladung zu verbessern kann das Halteelement über jeweils wenigstens zwei Montageelemente an jedem Seitenwandelement festgelegt werden. Um die abzuleitenden Kräfte der Ladung besser zu verteilen, können die Montageelemente eines Seitenwandelements auf unterschiedlichen Höhen mit dem Seitenwandelement festgelegt werden.

Um das Verfahren zu vereinfachen und zu beschleunigen, können die Montageelemente in Krafteinleitungsmittel von Seitenplanen eingehängt werden. Die Krafteinleitungsmittel können dabei als Schlaufen ausgebildet sein. Wenn die Schlaufen von Längsgurten bereitgestellt werden, die in Längsrichtung der Seitenplane verlaufen, können trotz Seitenplanen hohe Kräfte von der Ladung abgeleitet werden. Dabei können die Längsgurte der Einfachheit halber mit den Seitenplanen verbunden, insbesondere verklebt und/oder vernäht sein. Noch höhere Kräfte lassen sich über die Längsgurte ableiten, wenn diese mit der Stirnwand und/oder der Rückwand verbunden sind. Dies kann beispielsweise bewerkstelligt werden, in dem die Seitenplane über ein Verbindungsmittel, etwa in Form einer Hakleiste oder Spannstange, in eine Eckrunge eingehängt und bedarfsweise mittels des Verbindungsmittels, insbesondere der Spannstange, gespannt wird.

Alternativ können die Montageelemente in Krafteinleitungsmittel von festen Seitenwänden eingehängt werden. Die Krafteinleitungsmittel können dann über Ladungssicherungsschienen bereitgestellt werden, die sich in Längsrichtung der zugehörigen Seitenwand erstrecken.

Um das Verfahren zu vereinfachen, kann das Halteelement aus zwei Halteelementteilen gebildet werden. Das Halteelement wird dann aus zwei jeweils über wenigstens ein Montageelement an Krafteinleitungsmitteln der gegenüberliegenden Seitenwandelemente zuvor festgelegten Halteelementteilen zusammengesetzt. Hierzu kann sich wenigstens einer Steckverbindung bedient werden, da dies einfach, zuverlässig und schnell möglich ist.

Alternativ zu einem zweiteiligen Halteelement können auch zwei miteinander auf einer Seite der Ladung verbundene Halteelemente vorgesehen sein. Der Unterschied besteht dabei im Wesentlichen darin, ob die beiden Halteelemente als separate Halteelemente oder als separate Teile eines Halteelements angesehen werden, die zur Bildung eines gemeinsamen Halteelements miteinander verbunden werden können. Der Unterschied zwischen zwei separaten Halteelementen und einem zweiteiligen Halteelement kann fließend sein und sich bedarfsweise auch gänzlich auflösen, mithin zur Ansichtssache werden.

Zur Verbesserung der Ladungssicherung können an jedem der Seitenwandelemente jeweils wenigstens zwei Montageelemente festgelegt werden, und zwar an wenigstens einem gemeinsamen, vorzugsweise aber an jeweils separaten, Krafteinleitungsmitteln. Anschließend kann dann die Ladung in einem Bereich des Laderaums platziert werden, der sich seitlich zu den Krafteinleitungsmitteln, bezogen auf beiden Seitenwandelemente zwischen den jeweiligen Krafteinleitungsmitteln der gegenüberliegenden Seitenwandelemente, erstreckt. Die wenigstens zwei Montageelemente eines jeden Seitenwandelements werden so lösbar mit dem Halteelement verbunden, so dass das Halteelement über die Montageelemente an den beiden Seitenwandelementen festgelegt ist und die Montageelemente auf der der Ladung zugeordneten Seite in einem Winkel von kleiner 30° mit dem jeweils zugehörigen Seitenwandelement abgespannt sind.

Alternativ oder zusätzlich können zur Verbesserung der Ladungssicherung an jedem der Seitenwandelemente jeweils wenigstens zwei Montageelemente festgelegt werden, und zwar an wenigstens einem gemeinsamen, vorzugsweise aber an jeweils separaten, Krafteinleitungsmitteln. Anschließend kann dann die Ladung in einem Bereich des Laderaums platziert werden der sich seitlich zu den Krafteinleitungsmitteln, bezogen auf beide Seitenwandelemente zwischen den jeweiligen Krafteinleitungsmitteln der gegenüberliegenden Seitenwandelemente, erstreckt. Anschließend kann in der Längsrichtung des Aufbaus von gegenüberliegenden Seiten an der Ladung jeweils wenigstens ein Halteelement vorgesehen werden. Jedes Halteelement wird dabei wenigstens mit einem Montageelement so lösbar verbunden, so dass die Halteelemente über die Montageelemente an Krafteinleitungsmitteln der beiden Seitenwandelemente jeweils an der der Ladung zugeordneten Seite in einem Winkel von kleiner 30° mit dem jeweils zugehörigen Seitenwandelement abgespannt sind. Die Montageelemente des einen Halteelements erstrecken sich mithin wenigstens grundsätzlich in Richtung des anderen Halteelements und umgekehrt. Auch hier sind Winkel von kleiner 20°, insbesondere von kleiner 10°, bevorzugt.

Wenn der Aufbau entladen wird, wird zunächst das Halteelement zumindest auf einer Seite von dem wenigstens einen dort vorgesehenen Montageelement getrennt, so dass das Halteelement den Zugang zur Ladung zum Entladen freigeben kann. Nach dem Entladen der Ladung kann dann das wenigstens eine Montageelement vom zugehörigen Krafteinleitungsmittel des zugehörigen Seitenwandelements getrennt werden. Vor dem Entladen der Ladung wäre das entsprechende Krafteinleitungsmittel nämlich wegen der Ladung nicht oder allenfalls eingeschränkt zugänglich.

Nachfolgend wird die Erfindung anhand einer lediglich Ausführungsbeispiele darstellenden Zeichnung erläutert. In der Zeichnung zeigt
- Fig. 1A-B: Nutzfahrzeuge mit Aufbauten in Form eines Planenaufbaus und eines Kofferaufbaus in einer schematischen, perspektivischen Ansicht,
- Fig. 2A-C: eine Ladungssicherung von lose gestapelter Ladung in den Nutzfahrzeugen aus Fig. 1 mit einer Ladungssicherungseinrichtung in einer Schnittansicht von hinten und in Schnittansichten von oben,
- Fig. 3: eine Ladungssicherung mittig in dem Planenaufbau von Fig. 1 in einer Schnittansicht von oben,
- Fig. 4A-B: ein Verfahren zur Ladungssicherung von lose gestapelter Ladung in einem Aufbau eines Nutzfahrzeugs in Schnittansichten von hinten und
- Fig. 5: eine alternative Ladungssicherungseinrichtung in einer Draufsicht.

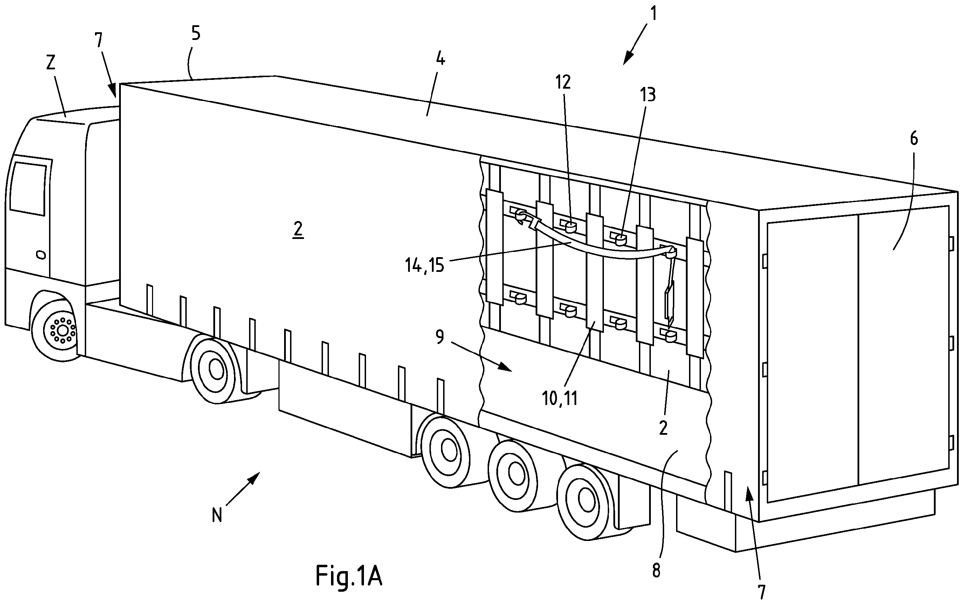

In der Fig. 1A ist ein von einer Zugmaschine Z gezogenes Nutzfahrzeug N in Form eines Sattelaufliegers dargestellt. Das Nutzfahrzeug N weist dabei einen Aufbau 1 in Form eines Planenaufbaus auf. Der Aufbau 1 hat an seinen Längsseiten Seitenwandelemente 2 in Form von Seitenplanen, die sich entlang von seitlichen Holmen 3 des Dachs 4 nach vorne und nach hinten verschieben lassen. Es handelt sich bei dem beispielhaft dargestellten Aufbau 1 in Form des Planenaufbaus daher um einen sogenannten Curtainsider, bei dem eine feste Stirnwand 5, eine mit einer Plane verschlossenes Dach 4 und eine Rückwandtüren aufweisende Rückwand 6 vorgesehen ist. Die Seitenwandelemente 2 können mit den zugehörigen, endseitigen Eckrungen 7 verbunden und stramm gezogen werden.

Das vordere Seitenwandelement 2 ist nur teilweise dargestellt, so dass in den nach unten vom Ladeboden 8 begrenzten Laderaum 9 und von innen auf die Innenseite des hinteren Seitenwandelements 2 gesehen werden kann. Bei dem Seitenwandelement 2 handelt es sich um eine Plankenplane, bei der in Taschen 10 der Seitenplane steife Planken 11 etwa aus Aluminium vorgesehen sind, um das Seitenwandelement 2 im geschlossenen Zustand auszusteifen. Zudem sind auf zwei unterschiedlichen Höhen des Seitenwandelements 2 Längsgurte 12 mit dem Seitenwandelement 2 verbunden, insbesondere verklebt. Die Längsgurte 12 erstrecken sich bis zu den Eckrungen 7 und sind durch das Einhängen des Seitenwandelements 2 in die Eckrungen 7 und das nachfolgende Strammziehen mit den Eckrungen 7 verbunden. Ferner weisen die Längsgurte 12 in mehr oder weniger regelmäßigen Abständen Krafteinleitungsmittel 13 in Form von Schlaufen auf, in die Montageelemente 14 von Ladungssicherungseinrichtungen 15 eingehängt werden können, wie dies beispielsweise für ein Gurtelement 14 dargestellt ist. Das Montageelement 14 ist mit seinem linken Ende fest in ein Krafteinleitungsmittel 13 eingehängt und mit seinem rechten Ende lediglich lose an einem anderen Krafteinleitungsmittel 13 gehalten, um bei der späteren Ladungssicherung leichter ergriffen werden zu können.

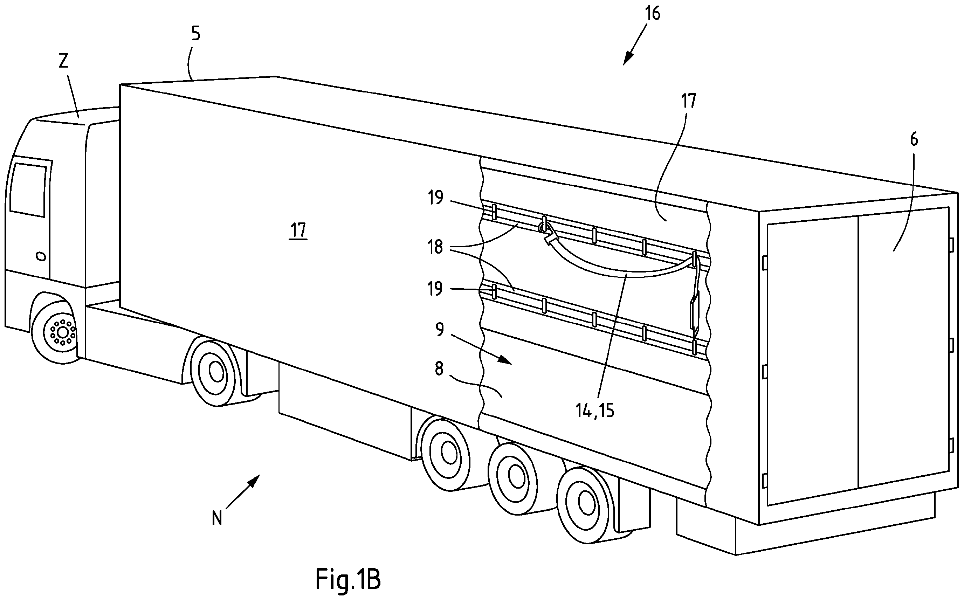

In der Fig. 1B ist ein Nutzfahrzeug N in Form eines Sattelaufliegers mit einem Aufbau 16 in Form eines Kofferaufbaus dargestellt, der Seitenwandelemente 17 in Form von festen Seitenwänden aufweist, die jeweils durch ein Paneel mit strukturgebenden Decklagen und einer dazwischen vorgesehenen Kernlage aus einem geschäumten Kunststoff gebildet werden. In diese Seitenwandelemente 17 eingelassen sind auf zwei unterschiedlichen Höhen Ladungssicherungsschienen 18, die in Längsrichtung eine Vielzahl von Ladungssicherungsmittel 19 bereitstellen, in die ein Montageelement 14 in Form eines Gurtelements zum Zwecke der Ladungssicherung eingehängt werden kann, wie dies dargestellt ist. Das Montageelement 14 ist mit seinem linken Ende fest in ein Krafteinleitungsmittel 19 eingehängt und mit seinem rechten Ende lediglich lose an einem anderen Krafteinleitungsmittel 19 gehalten, um bei der späteren Ladungssicherung leichter ergriffen werden zu können.

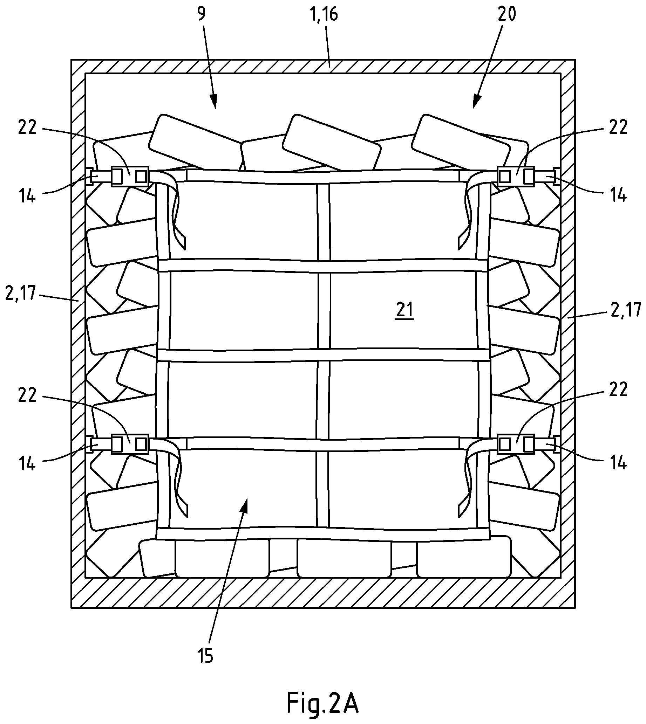

In der Fig. 2A ist ein Aufbau 1,16 entsprechend der Fig. 1A-B in einer Schnittansicht von hinten dargestellt. Es kann sich bei dem Aufbau 1,16 sowohl um einen Planenaufbau als auch um einen Kofferaufbau handeln. Die Unterschiede spielen vorliegend nur eine untergeordnete Rolle. Im Laderaum 9 des Aufbaus 1,16 ist lose gestapelt, in sogenannter gebrezelter Ladung, Ladung 20 in Form von Reifen vorgesehen. Um zu vermeiden, dass die Ladung 20 nach hinten verrutschen, wird die Ladung 20 durch eine Ladungssicherungseinrichtung 15 gesichert. Die Ladungssicherungseinrichtung 15 umfasst ein flächiges Halteelement 21 in Form einer rechteckigen Plane, welche sich von hinten an die Ladung 20 anschließt und an dieser anliegt. Zudem umfasst die Ladungssicherungseinrichtung 15 noch vier Montageelemente 14, die an gegenüberliegenden Außenseiten jeweils auf unterschiedlichen Höhen mit dem Halteelement 21 verbunden sind. Bei der dargestellten und insoweit bevorzugten Ladungssicherungseinrichtung 15 sind die Montageelemente 14 jeweils lösbar mit dem Halteelement 21 verbunden. Diese Verbindungen werden über Verbindungsmittel 22 hergestellt, die es erlauben, die Montageelemente 14 stramm zu ziehen, und die Montageelemente 14 dann im strammgezogenen Zustand zu halten. Entsprechende Verbindungsmittel 22 sind aus anderen Anwendungen aus dem Stand der Technik bekannt.

Die lösbare Verbindung des Halteelements 21 mit den Montageelementen 14 erlaubt eine sehr einfache und schnelle Ladungssicherung. Die Montageelemente 14 können bereits vor dem Laden der Ladung 20 an Krafteinleitungsmitteln 13,19 eingehängt oder anderweitig verbunden werden. Dies muss dann nicht mehr nach dem Beladen erfolgen, wenn die Krafteinleitungsmittel 13,19 nicht mehr ohne Weiteres zugänglich sind. Die mit dem Halteelement 21 zu verbindenden Enden der Montageelemente 14 können an anderen Krafteinleitungsmitteln 13,19 zeitweise gehalten sein, bedarfsweise ebenfalls durch Einhängen der Montageelemente 14. Dadurch wird sichergestellt, dass die entsprechenden Enden der Montageelemente 14 nach dem Beladen leicht ergriffen und von dem zugehörigen Krafteinleitungsmittel 13,19 getrennt werden können. Trotzdem bleiben die Montageelemente 14 aber mit dem anderen Ende im Bereich der Ladung 20 mit dem zugehörigen Krafteinleitungsmittel 13,19 fest verbunden.

Nach dem Laden wird das Halteelement 21 in den Laderaum 9 eingebracht und werden die dem Halteelement 21 zugeordneten losen Enden der Montageelemente 14 mit dem Halteelement 21 verbunden. Die Montageelemente 14 werden anschließend strammgezogen, so dass das Halteelement 21 von hinten gegen die Ladung 20 drückt und diese so gegenüber einem Verrutschen nach hinten sichert.

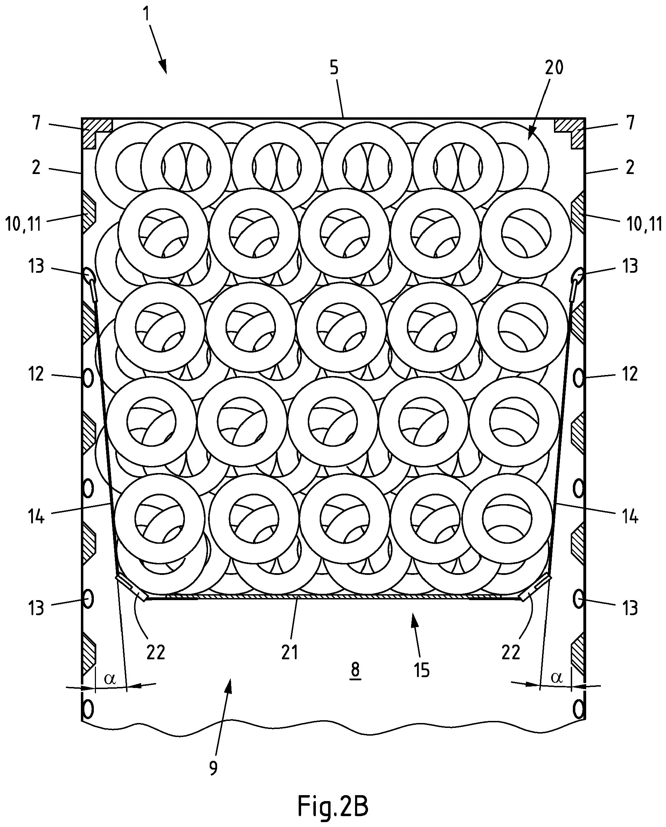

Die Ladungssicherungseinrichtung 15 in der abgespannten Stellung ist in der Fig. 2B in einer Ansicht von oben in einem Aufbau 1 in Form eines Planenaufbaus nach Fig. 1 dargestellt. Die Ladung 20 in Form der Reifen ist bis nach vorne zur Stirnwand 5 geladen. Nach hinten wird die Ladung 20 durch das flächige Halteelement 21 gehalten, das seinerseits durch die Montageelemente 14 an den Seitenwandelementen 2 gehalten ist. Die Montageelemente 14 sind einerseits lösbar mit dem Halteelement 21 und mit einem der Ladung 20 zugewandten Ende mit einem Krafteinleitungsmittel 13 der jeweils zugehörigen Seitenwandelementen 2 verbunden. Dabei erstrecken sich die Montageelemente 14 in einem Winkel α von weniger als 30° zum jeweils zugehörigen Seitenwandelement 2. So werden die Kräfte von der Ladung 20 überwiegend parallel in die Seitenwandelemente 2 eingeleitet. Die Seitenwandelemente 2 können die Kräfte so beschädigungsfrei und ohne größere Deformation in den Laderaum 9 hinein aufnehmen. Die Kräfte werden dabei im dargestellten und insoweit bevorzugten Aufbau 1 in die Längsgurte 12 der Seitenwandelemente 2 eingeleitet und von dort an die vorderen Eckrungen 7 bzw. die Stirnwand 5 abgeleitet.

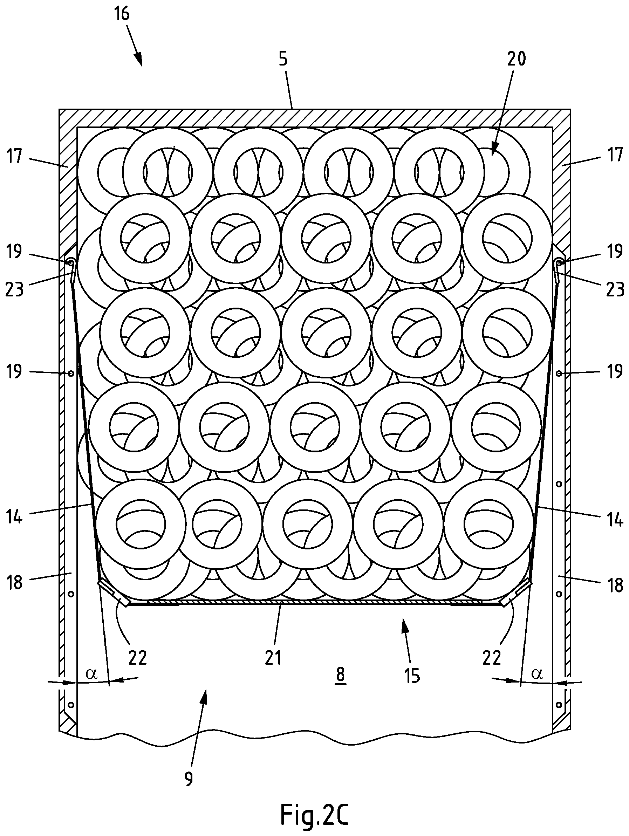

In der Fig. 2C ist eine analoge Ladungssicherungseinrichtung 15 in einem Aufbau 16 in Form eines Kofferaufbaus dargestellt. Im Unterschied zum Planenaufbau sind die Montageelemente 14 in die durch die Ladungssicherungsschienen 18 bereitgestellten Krafteinleitungsmittel 19 in die Seitenwandelemente 17 in Form fester Seitenwände eingehängt. Zu diesem Zweck sind die Montageelemente 14 mit Haken 23 ausgestattet. Montageelemente 14 können auch über Haken 23 in die in Form von Schlaufen gebildeten Krafteinleitungsmittel 13 des Planenaufbaus eingehängt sein. Andere Verbindungsmittel sind aber ebenfalls denkbar. Die Montageelemente 14 erstrecken sich in einem Winkel α von weniger als 30° in Bezug auf die jeweils zugehörigen Seitenwandelemente 17.

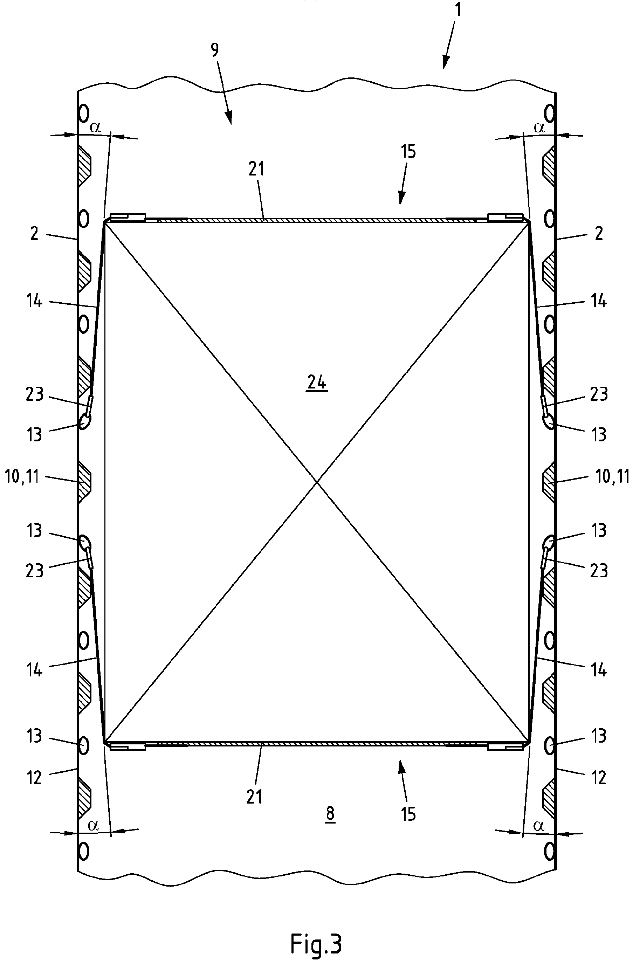

In der Fig. 3 ist eine Ladungssicherung mit zwei Ladungssicherungseinrichtungen 15 in einem mittleren Bereich des Laderaums 9 eines Aufbaus 1 in Form eines Planenaufbaus in einem Schnitt von oben dargestellt. Anstelle eines Planenaufbaus käme aber auch ein Aufbau 16 in Form eines Kofferaufbaus in Frage. Die Ladung 24 ist als ein einziges Stückgut dargestellt, es könnte sich aber auch um lose gestapelte Ladung handeln. Die Ladung 24 ist sowohl gegenüber einem Verrutschen nach hinten als auch gegenüber einem Verrutschen nach vorne gesichert. Dazu ist angrenzend an die Ladung 24 nach vorne und nach hinten jeweils ein Halteelement 21 vorgesehen. Bei den Halteelementen 21 kann es sich beispielsweise um Planen oder Netze handeln.

Vor dem Laden werden an Krafteinleitungsmitteln 13 der Seitenwandelemente 2 Montageelemente 14 angebunden, und zwar im Bereich des Aufbaus 1 seitlich zu der vorzusehenden Ladung 24, dort wo mithin nachträglich zum Beladen der Zugang erschwert ist. Einzelne Montageelemente 14 werden dann nach vorne und andere Montageelemente 14 nach hinten geführt, und zwar bis in Bereiche des Laderaums 9, in die sich die Ladung 24 nach dem Beladen nicht hinein erstreckt. Dort können die Montageelemente 14 dann nach dem Laden leicht ergriffen und mit den Halteelementen 21 verbunden werden. Dies erfolgt lösbar, so dass das Halteelement 14 während des Beladens und/oder des Entladens nicht im Laderaum 9 angeordnet sein muss und somit das Be- und/oder Entladen nicht beeinträchtigen kann. Die Verbindung zwischen dem Halteelement 21 und den Montageelementen 14 kann mit entsprechenden Verbindungsmitteln 22 als Steckverbindung ausgebildet sein und zudem ein Spannen der Montageelemente 14 erlauben. Eine Steckverbindung ist jedoch nicht erforderlich. Bedarfsweise ist es noch nicht einmal erforderlich, dass die Montageelemente 14 mit abgespannt werden. Dies ist letztlich von der Ladung 24 und deren Sicherung abhängig. In einigen Fällen kann es zweckmäßig sein, wenn die Montageelemente 14 selbst als Spanngurte ausgebildet sind und somit beispielsweise über eine Ratsche gespannt werden können.

Wenn die Ladung 24 im Laderaum 9 platziert worden ist, werden bei der dargestellten und insoweit bevorzugten Ladungssicherungseinrichtung 15 die Halteelemente 21 in den Laderaum 9 vor und hinter der Ladung 24 eingebracht. Aus diesem Grund ist es bevorzugt, wenn der Aufbau 1 als Planenaufbau, insbesondere als Curtainsider, ausgebildet ist, um Ladungssicherung einfach vor und hinter der Ladung 24 betreiben zu können. Die mit den Halteelementen 21 zu verbindenden Enden der Montageelemente 14 können dabei lose mit Krafteinleitungsmitteln 13 in Längsrichtung jenseits der Ladung verbunden sein. Die Montageelemente 14 werden dann dort ergriffen und von den Krafteinleitungsmitteln 13 gelöst und sodann mit dem zugehörigen Halteelement 21 auf den zugeordneten Seiten der Halteelemente 21 verbunden und sodann abgespannt. Die dem hinteren Halteelement 21 zugeordneten Montageelemente 14 erstrecken sich dabei seitlich an der Ladung 24 vorbei nach vorne. Die dem vorderen Halteelement 21 zugeordneten Montageelemente 14 erstrecken sich seitlich an der Ladung 24 vorbei nach hinten. Dabei sind die Montageelemente 14 so weit vorne bzw. hinten angeordnet, dass der Winkel α zwischen dem zugehörigen Seitenwandelement und dem jeweiligen Montageelement 14 wenigster als 30° beträgt. Dabei ist es grundsätzlich zweckmäßig, wenn sich die nach vorne abgespannten und die nach hinten abgespannten Montageelemente 14 nicht überkreuzen. Denkbar ist dies aber trotzdem, je nachdem wo die Montageelementen 14 mit den Halteelementen 21 und mit den Seitenwandelementen 2 verbunden werden. Zudem müssten die Seitenwandelemente 2 auch nicht als Plankenplane ausgebildet sein. Eine Seitenplane ohne Planken kann auch verwendet werden. Auch ein Aufbau 16 in Form eines Kofferaufbaus ist denkbar.

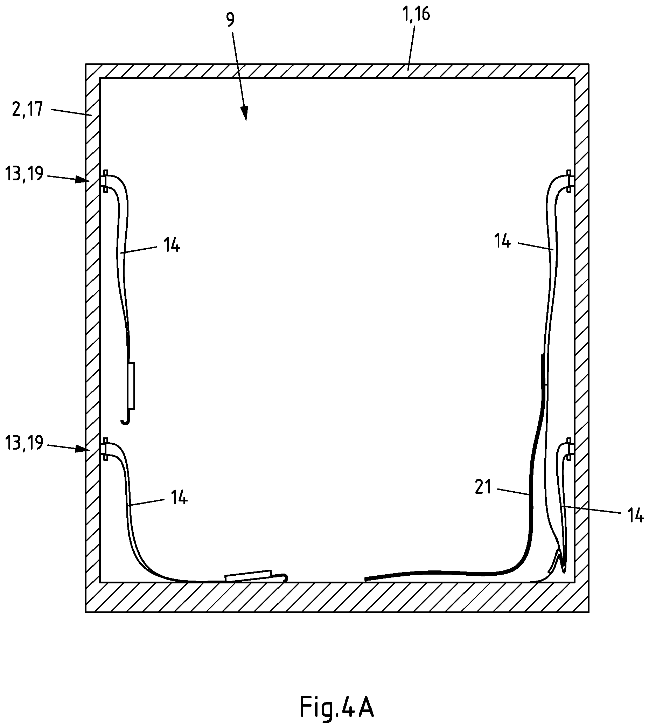

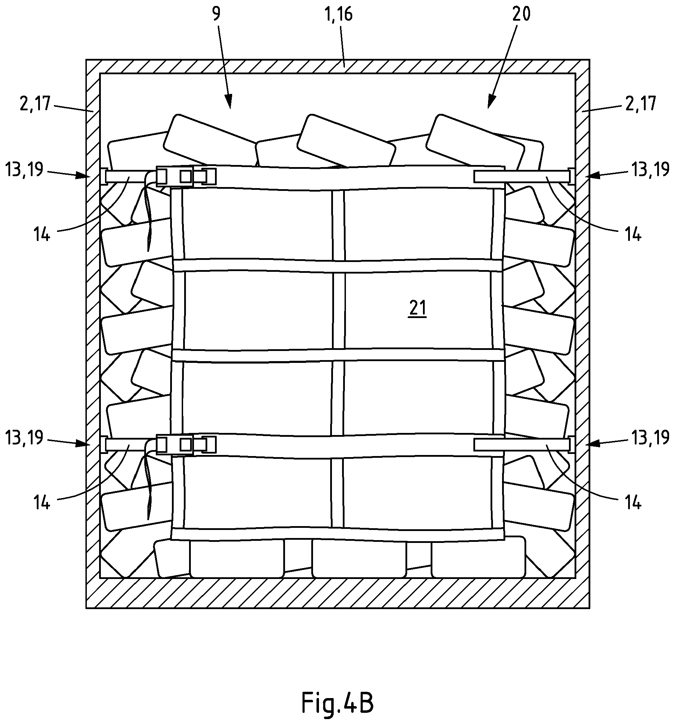

In den Fig. 4A-B ist eine alternative Ladungssicherungseinrichtung 15 dargestellt. Bei dieser Ladungssicherungseinrichtung 15 sind nur die Montageelemente 14 einer Seite des Halteelements 21 lösbar vorgesehen. Die Montageelemente 14 der anderen Seite des Halteelements 21 sind fest mit dem Halteelement 21 verbunden. Die fest mit dem Halteelement 21 verbundenen Montageelemente 14 werden mit jeweils einem Ende an Krafteinleitungsmitteln 13,19 an einem Seitenwandelement 2,17 festgelegt, etwa durch Einhängen, die später seitlich zur späteren Ladung 20 angeordnet sein können. Das Halteelement 21 wird dagegen in einer Position neben dem zugehörigen Seitenwandelement 2,17 angeordnet, die nach dem Beladen hinter oder vor der Ladung 20 angeordnet ist. Die Montageelemente 14 des anderen Seitenwandelements 2,17 werden auch an Krafteinleitungsmitteln 13,19 des zugehörigen Seitenwandelements 2,17 festgelegt, seitlich zu denen die Ladung 20 positioniert werden kann, wie dies schematisch in der Fig. 4A dargestellt ist. Nach dem Laden wird das Halteelement 21 um die Ladung 20 herumgeführt und mit den des anderen Seitenwandelements 2,17 zugeordneten Montageelementen 14 verbunden sowie anschließend strammgezogen, wie dies in der Fig. 4B dargestellt ist.

Es versteht sich, dass die Montageelemente 14 auch auf der anderen Seite der Ladung 20 bezogen auf das Halteelement 21 mit Krafteinleitungsmitteln 13,19 der Seitenwandelemente 2,17 verbunden werden können, wenn die Ladung 20 beispielsweise nicht bis an die Stirnwand 5 verladen wird. Es versteht sich auch, dass die Montageelemente 14 lösbar mit den Seitenwandelementen 2,17 verbunden werden können, so dass die Montageelemente 14 je nach zu ladender Ladung 20 voran an unterschiedlichen Krafteinleitungsmitteln 13,19 festgelegt werden können. Es können alternativ oder zusätzlich auch Montageelemente 14 an unterschiedlichen Krafteinleitungsmitteln 13,19 entlang des Laderaums 9 vorgesehen sein. Dann werden nach dem Laden die nächstgelegenen, geeigneten Montageelemente 14 zur Ladungssicherung eingesetzt. Es muss dann nicht vor dem Laden entschieden werden, wo genau die Montageelemente 14 mit Krafteinleitungsmitteln 13,19 der Seitenwandelemente 2,17 verbunden werden sollten, um die Ladung 20 nach dem Laden zweckmäßig sichern zu können.

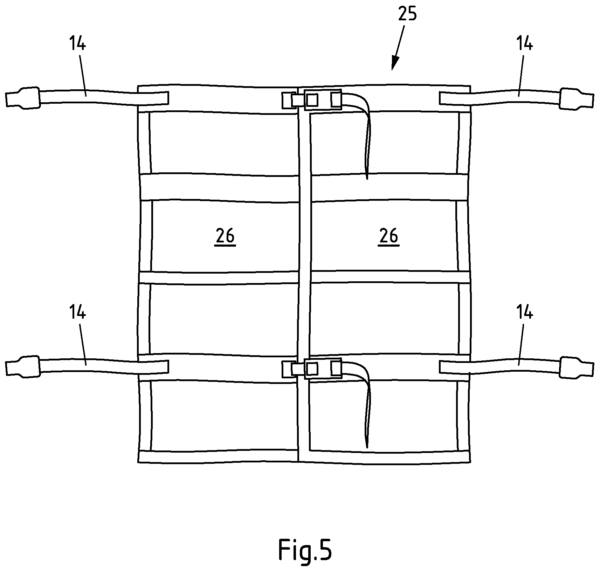

In der Fig. 5 ist eine weitere alternative Ladungssicherungseinrichtung 15 dargestellt, das ein zweiteiliges Halteelement 25 umfasst. Bei dem dargestellten und insoweit bevorzugten Halteelement 25 sind mit jedem der beiden Halteelementteile 26 Montageelemente 14 fest verbunden, und zwar an jeweils gegenüberliegenden Seiten der Halteelementteile 26. Mit diesen Montageelementen 14 können die Halteelementeile 26 vor dem Laden an Krafteinleitungsmitteln 13,19 gegenüberliegender Seitenwandelemente 2,17 festgelegt werden. Nach dem Laden werden die Halteelementteile 26 um die Ladung herumgeführt und miteinander verbunden. Dazu sind bei dem dargestellten und insoweit bevorzugten Halteelement 21 Montageelemente 14 in Form von Spanngurten vorgesehen, um die Ladungssicherungseinrichtung 15 insgesamt abspannen zu können. Man könnte die Ladungssicherungseinrichtung 15 der Fig. 5 auch so auffassen, dass diese zwei separate Halteelemente 21 umfasst, die miteinander und damit auch mit gegenüberliegenden Montageelementen 14 lösbar verbunden werden können.

### Bezugszeichenliste

- 1: Aufbau
- 2: Seitenwandelemente
- 3: Holm
- 4: Dach
- 5: Stirnwand
- 6: Rückwand
- 7: Eckrungen
- 8: Ladeboden
- 9: Laderaum
- 10: Tasche
- 11: Planke
- 12: Längsgurt
- 13: Krafteinleitungsmittel
- 14: Montageelement
- 15: Ladungssicherungseinrichtung
- 16: Aufbau
- 17: Seitenwandelemente
- 18: Ladungssicherungsschiene
- 19: Krafteinleitungsmittel
- 20: Ladung
- 21: Halteelement
- 22: Verbindungsmittel
- 23: Haken
- 24: Ladung
- 25: Halteelement
- 26: Halteelementteil
- A: Winkel
- N: Nutzfahrzeug
- Z: Zugmaschine

## Patentansprüche

1. Aufbau (1,16) eines Nutzfahrzeugs (N), insbesondere Lastkraftwagen, Anhänger oder Sattelauflieger, umfassend zwei Seitenwandelemente (2,17), einen zwischen den Seitenwandelementen (2,17) angeordneten Laderaum (9), eine im Laderaum (9) angeordnete Ladung (20,24) und eine Ladungssicherungseinrichtung (15) zur Sicherung der Ladung (20,24) gegenüber einem Verrutschen in Längsrichtung des Aufbaus (1,16), wobei die Ladungssicherungseinrichtung (15) wenigstens ein sich in Längsrichtung des Aufbaus (1,16) an die Ladung (20,24) anschließendes, über jeweils wenigstens ein Montageelement (14) an Krafteinleitungsmitteln (13,19) der beiden Seitenwandelemente (2,17) festgelegtes Halteelement (21,25) aufweist,
**dadurch gekennzeichnet, dass** die Montageelemente (14) auf der Ladung (20,24) zugeordneten Seite des Halteelements (21) in einem Winkel (α) von kleiner 30° mit dem jeweils zugehörigen Seitenwandelement (2,17) abgespannt sind und dass wenigstens ein mit einem Krafteinleitungsmittel (13,19) eines Seitenwandelements (2,17) verbundenes Montageelement (14) lösbar mit dem Halteelement (21,25) verbunden ist.

2. Aufbau nach Anspruch 1,
**dadurch gekennzeichnet, dass** das wenigstens eine Halteelement (21,25) als Wand, insbesondere Wandpaneel, Plane oder Netz ausgebildet ist und/oder dass wenigstens zwei, vorzugsweise jeweils wenigstens teilweise in Längsrichtung des Aufbaus (1,16) demselben Ende der Ladung (20,24) zugeordnete, Halteelemente (21,25) vorgesehen sind.

3. Aufbau nach Anspruch 2,
**dadurch gekennzeichnet, dass** wenigstens ein mit wenigstens einem Krafteinleitungsmittel (13,19) an einem Seitenwandelement (2,17) verbundenes Montageelement (14) lösbar über ein Halteelement (21,25) mit einem weiteren Halteelement (21,25) verbunden ist und/oder dass die beiden Halteelemente (21,25), insbesondere über eine Steckverbindung, direkt oder über wenigstens ein Montageelement (14) miteinander verbunden sind.

4. Aufbau nach einem der Ansprüche 1 bis 3,
**dadurch gekennzeichnet, dass** das wenigstens eine Halteelement (21,25) über jeweils wenigstens zwei Montageelemente (14) an den Seitenwandelementen (2,17) festgelegt ist, dass die jeweils wenigstens zwei Montageelemente (14) auf der der Ladung (20,24) zugeordneten Seite des Halteelements (21,25) mit den zugehörigen Seitenwandelementen (2,17) verbunden sind, dass die Montageelemente (14) jeweils in einem Winkel (α) von kleiner 30° mit dem jeweils zugehörigen Seitenwandelement (2,17) abgespannt sind und dass, vorzugsweise, die wenigstens zwei mit jeweils wenigstens einem Krafteinleitungsmittel (13,19) der Seitenwandelemente (2,17) verbundenen Montageelemente (14) lösbar mit dem wenigstens einen Halteelement (21,25) verbunden sind.

5. Aufbau nach Anspruch 4,
**dadurch gekennzeichnet, dass** die wenigstens zwei jedem Seitenwandelement (2,17) zugeordneten Montageelemente (14) jeweils auf unterschiedlichen Höhen mit dem wenigstens einen Halteelement (21,25) verbunden sind und dass, vorzugsweise, die wenigstens zwei jedem Seitenwandelement (2,17) zugeordneten Montageelemente (14) jeweils auf unterschiedlichen Höhen mit Krafteinleitungsmitteln (13,19) der jeweiligen Seitenwandelemente (2,17) verbunden sind.

6. Aufbau nach einem der Ansprüche 1 bis 5,
**dadurch gekennzeichnet, dass** das wenigstens eine Montageelement (14) über eine Steckverbindung mit dem wenigstens einen Halteelement (21,25) lösbar verbunden ist und/oder dass die gegenüberliegenden Seitenwandelementen (2,17) zugeordneten Montageelemente (14) jeweils lösbar mit dem wenigstens einen Halteelement (21,25) verbunden sind und/oder dass das wenigstens eine Montageelement (14) als wenigstens ein Gurtelement, wenigstens ein Seil, wenigstens ein Draht, wenigstens ein Drahtseil und/oder wenigstens eine Kette ausgebildet ist.

7. Aufbau nach einem der Ansprüche 1 bis 6,
**dadurch gekennzeichnet, dass** der Aufbau (1) ein Planenaufbau ist und die Seitenwandelemente (2) Seitenplanen sind und dass, vorzugsweise, die Montageelemente (14) in Krafteinleitungsmittel (13), vorzugsweise in Form von Schlaufen der Seitenplanen, insbesondere von mit einer Stirnwand (5) und/oder einer Rückwand (6) verbundenen Längsgurten (12), eingehängt sind.

8. Aufbau nach einem der Ansprüche 1 bis 6,
**dadurch gekennzeichnet, dass** der Aufbau (16) ein Kofferaufbau ist und die Seitenwandelemente (17) feste Seitenwände sind und dass, vorzugsweise, die Montageelemente (14) in Krafteinleitungsmittel (19), vorzugsweise in Form von Ladungssicherungsschienen der Seitenwände (17) eingehängt sind.

9. Aufbau nach einem der Ansprüche 1 bis 8,
**dadurch gekennzeichnet, dass** weitere, nicht zum Befestigen des Halteelements (14) verwendete Montageelemente (14) in Längsrichtung der Seitenwandelemente (2,17) verteilt an Krafteinleitungsmitteln (13,19) der Seitenwandelemente (2,17) festgelegt sind und/oder dass in Längsrichtung des Aufbaus (1,16) sowohl vor der Ladung (20,25) als auch hinter der Ladung (20,25) wenigstens ein an die Ladung (20,25) anschließendes, über jeweils wenigstens ein Montageelement (14) an den Seitenwandelementen (2,17) festgelegtes Halteelement (21,25) vorgesehen ist und die Montageelemente (14) jeweils auf der der Ladung (20,25) zugeordneten Seite mit einem Krafteinleitungsmittel (13,19) des jeweils zugehörigen Seitenwandelements (2,17) in einem Winkel (α) von kleiner 30° und, wenigstens teilweise lösbar, mit dem Halteelement (21,25) abgespannt sind.

10. Verfahren zur Sicherung einer Ladung (20,25) in einem Aufbau (1,16) nach einem der Ansprüche 1 bis 9 mit einer Ladungssicherungseinrichtung (15) zur Sicherung der Ladung (20,24) gegenüber einem Verrutschen in Längsrichtung des Aufbaus (1,16),
- bei dem an jedem der Seitenwandelemente (2,17) jeweils wenigstens ein Montageelement (14) an einem Krafteinleitungsmittel (13,19) festgelegt wird,
- bei dem anschließend die Ladung in einem Bereich des Laderaums (9) seitlich neben den Krafteinleitungsmitteln (13,19) platziert wird,
- bei dem in der Längsrichtung des Aufbaus (1,16) an der Ladung (20,24) ein Halteelement (21,25) vorgesehen wird und
- bei dem wenigstens ein Montageelement (14) so lösbar mit dem Halteelement (21,25) verbunden wird, so dass das Halteelement (21,25) über die Montageelemente (14) an den beiden Seitenwandelementen (2,17) festgelegt ist und sich die Montageelemente (14) auf der der Ladung (20,24) zugeordneten Seite in einem Winkel (α) von kleiner 30° mit dem jeweils zugehörigen Seitenwandelement (2,17) abgespannt sind.

11. Verfahren nach Anspruch 10,
- bei dem vor dem Platzieren der Ladung (20,24) im Laderaum (9) wenigstens ein an einem Krafteinleitungsmittel (13,19) eines Seitenwandelements (2,17) festgelegtes Montageelement (14), insbesondere unlösbar, mit dem Halteelement (21,25) verbunden ist und/oder
- bei dem das Halteelement (21,25) über jeweils wenigstens zwei Montageelemente (14), vorzugsweise auf unterschiedlichen Höhen, an jedem Seitenwandelement (2,17) festgelegt wird.

12. Verfahren nach Anspruch 10 oder 11,
- bei dem die Montageelemente (14) in Krafteinleitungsmittel (13,19) in Form von Schlaufen von Seitenplanen, insbesondere von mit einer Stirnwand (5) und/oder einer Rückwand (6) verbundenen Längsgurten (12), eingehängt werden oder
- bei dem die Montageelemente (14) in Krafteinleitungsmittel (13,19) in Form von Ladungssicherungsschienen (18) von festen Seitenwänden eingehängt werden

13. Verfahren nach einem der Ansprüche 10 bis 12,
- bei dem das Halteelement (21,25) aus zwei jeweils über wenigstens ein Montageelement (14) an Krafteinleitungsmitteln (13,19) der gegenüberliegenden Seitenwandelemente (2,17) zuvor festgelegten Halteelementteilen (26), vorzugsweise über wenigstens eine Steckverbindung, zusammengesetzt wird.

14. Verfahren nach einem der Ansprüche 10 bis 13,
- bei dem an jedem der Seitenwandelemente (2,17) jeweils wenigstens zwei Montageelemente (14) an wenigstens einem Krafteinleitungsmittel (13,19) festgelegt werden,
- bei dem anschließend die Ladung (20,24) in einem Bereich des Laderaums (9) seitlich neben den Krafteinleitungsmitteln (13,19) platziert wird,
- bei dem wenigstens zwei Montageelemente (14) so lösbar mit dem Halteelement (21,25) verbunden werden, so dass das Halteelement (21,25) über die Montageelemente (14) an den beiden Seitenwandelementen (2,17) festgelegt ist und sich die Montageelemente (14) auf der der Ladung (20,24) zugeordneten Seite in einem Winkel (α) von kleiner 30° mit dem jeweils zugehörigen Seitenwandelement (2,17) abgespannt sind.

15. Verfahren nach einem der Ansprüche 10 bis 14,
- bei dem an jedem der Seitenwandelemente (2,17) jeweils wenigstens zwei Montageelemente (14) an wenigstens einem Krafteinleitungsmittel (13,19) festgelegt werden,
- bei dem anschließend die Ladung (20,24) in einem Bereich des Laderaums (9) seitlich neben den Krafteinleitungsmitteln (13,19) platziert wird,
- bei dem in der Längsrichtung des Aufbaus (1,16) von gegenüberliegenden Seiten an der Ladung (20,24) jeweils ein Halteelement (21,25) vorgesehen wird und
- bei dem wenigstens ein Montageelement (14) so lösbar mit jedem Halteelement (21,25) verbunden wird, so dass die Halteelemente (21,25) über die Montageelemente (14) an Krafteinleitungsmitteln (13,19) der beiden Seitenwandelemente (2,17) jeweils an der den Ladung (20,24) zugeordneten Seiten in einem Winkel (α) von kleiner 30° mit dem jeweils zugehörigen Seitenwandelement (2,17) abgespannt sind.
